# EUROPÄISCHE PATENTSCHRIFT

(11) **EP 0 724 109 B1**
(45) Veröffentlichungstag und Bekanntmachung des Hinweises auf die Patenterteilung: **08.03.2000**
(21) Anmeldenummer: 95119416.6
(22) Anmeldetag: 09.12.1995
(51) Int. Cl.: F16L 37/088

(54) **Steckverbindung für Druckmittelleitungen**
Plug connector for high-pressure fluid lines
Joint à emboîtement pour tuyauterie de fluide à haute pression

(30) Priorität: 24.01.1995 DE 29501006 U
(43) Veröffentlichungstag der Anmeldung: 31.07.1996
(73) Patentinhaber: ARMATURENFABRIK HERMANN VOSS GMBH & CO., D-51688 Wipperfürth (DE)
(72) Erfinder: Berg, Manfred, D-51688 Wipperfürth (DE); Goller, Bernd, D-51688 Wipperfürth (DE)
(74) Vertreter: Patentanwälte Dr. Solf & Zapf

(56) Entgegenhaltungen:
- EP-A- 0 240 452
- WO-A-92/08074
- DE-A- 2 953 463
- DE-U- 9 420 380
- GB-A- 2 153 028
- US-A- 4 842 309

## Beschreibung

Die vorliegende Erfindung betrifft eine Steckverbindung für Druckmittelleitungen, mit einem eine Aufnahmeöffnung zum Einstecken eines Steckerteils aufweisenden Gehäuseteil und mit einem innerhalb der Aufnahmeöffnung gelagerten, radialelastisch verformbaren, zum Arretieren des eingesteckten Steckerteils in eine an diesem vorhandene Außenringnut eingreifenden Haltering.

Derartige Steckverbindungen sind aus zahlreichen Veröffentlichungen bekannt. Beispielsweise beschreibt die EP-B-0 300 023 eine solche Steckverbindung, wobei aber nachteilig ist, daß der dort als Drahtsprengring ausgebildete Haltering insbesondere bei "liegender", d.h. nicht vertikaler Anordnung der Steckachse vor dem Einstecken des Steckerteils innerhalb der Ringkammer exzentrisch verrutschen kann, was dann aber das Einstecken des Steckerteils behindert. Um letzteres zu vermeiden, ist daher am Steckerteil ein Außenkonus vorhanden, der zum (Wieder-) Zentrieren und zum Aufweiten des Sprengringes dient. Aufgrund der Gefahr des exzentrisches Verrutschens des Drahtsprengringes muß dieser Außenkonus aber sehr lang und ausgeprägt sein, wodurch nachteiligerweise die gesamte Steckverbindung ebenfalls eine relativ große Baulänge besitzt.

Eine ähnliche Schnellverbindungskupplung ist aus der DE-OS 27 48 157 bekannt. Auch hierbei muß ein Verschluß- bzw. Sicherungsring im Falle eines exzentrischen Verrutschens beim Steckvorgang erst wieder durch eine Schräge bzw. einen Konus des Steckers zentriert werden.

Die US-A-4 842 309 beschreibt auch eine solche Verbindung.

Der vorliegenden Erfindung liegt die Aufgabe zugrunde, eine Steckverbindung der gattungsgemäßen Art zu schaffen, die sich durch besonders kompakte Bauform, insbesondere Baulänge, auszeichnet, dabei aber dennoch in jeder beliebigen Raumorientierung liegend problemlos gesteckt werden kann, wobei zudem bei konstruktiv einfacher und preiswerter Ausgestaltung insbesondere des Halteringes geringe Steckkräfte, jedoch hinreichend hohe Haltekräfte erreicht werden sollen.

Erfindungsgemäß wird dies dadurch erreicht, daß der Haltering als Blechformteil mit einem umgebördelten Arretierringabschnitt zum Eingreifen in die Außenringnut des Steckerteils sowie mit einem sich in Einsteckrichtung an den Arretierringabschnitt anschließenden und konisch erweiternden Ringabschnitt ausgebildet ist, wobei der Arretierringabschnitt dadurch radialelastisch verformbar ist, daß er durch mindestens drei über den Ringumfang verteilt angeordnete, sich in axialer Richtung in den konischen Ringabschnitt erstreckende Schlitze in mindestens drei Ringsektoren unterteilt ist.

Aufgrund dieser vorteilhaften Ausgestaltung des Halteringes als Blechformteil ist dieser sehr einfach und preiswert herstellbar. Von wesentlichem Vorteil ist hierbei der konisch erweiterte Ringabschnitt, über den der Haltering erfindungsgemäß selbstzentrierend in der Aufnahmeöffnung des Gehäuseteils abgestützt ist. Hierdurch wird wirksam ein exzentrisches Verrutschen des Halteringes vermieden, so daß sich vorteilhafterweise ein ausgeprägter Außenkonus am Steckerteil praktisch erübrigen kann. Am Steckerteil braucht lediglich eine geringfügige Anfasung vorhanden zu sein, um das radiale Aufweiten des Halteringes im Bereich des umgebördelten Arretierringabschnittes zu bewirken. Somit wird durch den sich erübrigenden "Zentrier- und Positionierkonus" die Baulänge erheblich reduziert. Dennoch wird auch bei liegender Anordnung der Steckverbindung der Haltering stets zentrisch gehalten, so daß der Steckvorgang stets problemlos möglich ist.

Aufgrund der erfindungsgemäßen Unterteilung in mindestens drei über axiale Schlitze gebildete Ringsektoren ist die zum Einstecken des Steckers erforderliche Steckkraft vorteilhafterweise sehr gering. Dennoch wird eine sehr hohe Haltekraft gegen Herausziehen des Steckerteils erreicht, indem der Haltering mit dem Arretierringabschnitt formschlüssig oder zumindest kraftformschlüssig in die Außenringnut des Steckerteils eingreift und aufgrund einer bestimmten Innenkontur der Aufnahmeöffnung auch fest und sicher bei auftretenden Zugkräften in der Außenringnut gehalten wird. Hierbei ist vorteilhafterweise durch geeignete Formgebung der die Ringsektoren unterteilenden Schlitze auch eine Beeinflussung bzw. Einstellung der Steck- und Haltekräfte möglich.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im folgenden die Erfindung näher erläutert werden. Dabei zeigen:
- Fig. 1 bis 3: jeweils im Halbaxialschnitt eine erfindungsgemäße Steckverbindung in verschiedenen Phasen des Einsteckvorganges,
- Fig. 4: eine Darstellung analog zu Fig. 1 bis 3, jedoch in der Arretierstellung des Steckerteils,
- Fig. 5: eine Draufsicht in axialer Richtung auf einen erfindungsgemäßen Haltering (Pfeilrichtung V gemäß Fig. 6) und
- Fig. 6: einen Schnitt entlang der Schnittlinie VI-VI in Fig. 5.

In den verschiedenen Zeichnungsfiguren sind gleiche Teile stets mit den gleichen Bezugszeichen versehen.

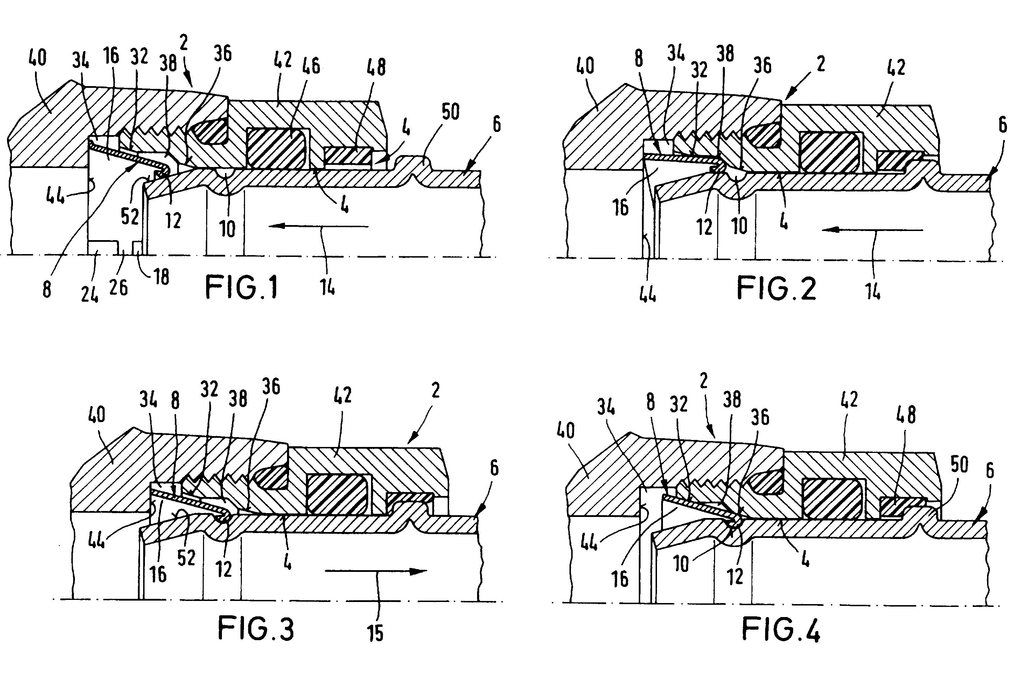

Wie sich zunächst aus Fig. 1 bis 4 jeweils ergibt, besteht eine erfindungsgemäße Steckverbindung hauptsächlich aus einem Gehäuseteil 2 mit einer Aufnahmeöffnung 4 zum Einstecken eines Steckerteils 6. Innerhalb der Aufnahmeöffnung 4, die als sogenannte "Formbohrung" ausgebildet ist, ist ein radialelastisch verformbarer Haltering 8 gelagert, der beim Einstecken des Steckerteils 6 in radialer Richtung elastisch aufweitbar ist und dann zum Arretieren des Steckerteils 6 zumindest bereichsweise in eine an diesem vorhandene, bevorzugt rillenartige Außenringnut 10 einrastet. Dieser Arretierzustand ist in Fig. 4 veranschaulicht.

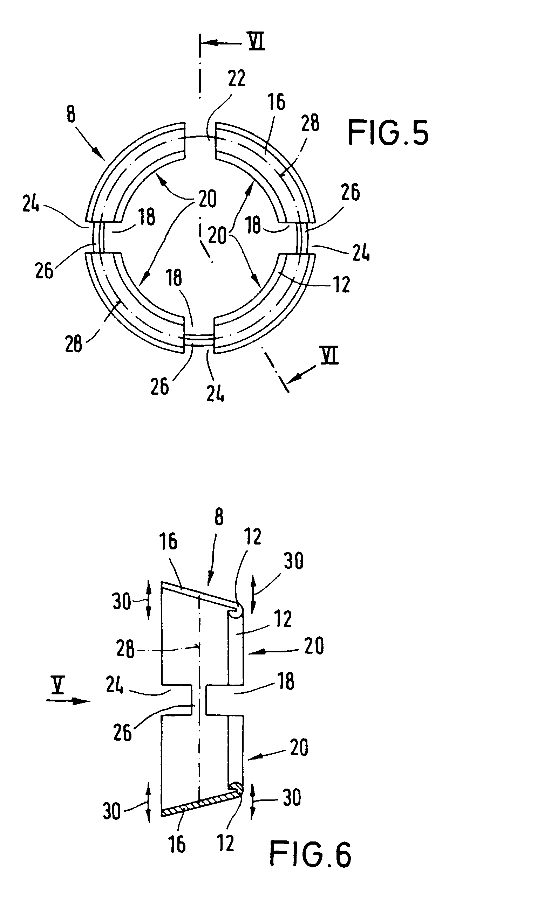

Der Haltering ist gesondert in Fig. 5 und 6 dargestellt. Dieser Haltering 8 ist erfindungsgemäß als Blechformteil, und zwar bevorzugt speziell als Tiefziehteil, aus Federblech mit einem umgebördelten Arretierringabschnitt 12 zum Eingreifen in die Außenringnut 10 des Steckerteils 6 sowie mit einem sich in Einsteckrichtung (Pfeil 14 in Fig. 1 und 2) an den Arretierabschnitt 12 anschließenden und sich konisch erweiternden Ringabschnitt 16 ausgebildet. Hierbei ist der Arretierringabschnitt 12 dadurch radialelastisch verformbar (aufweitbar), daß er durch mindestens drei - im dargestellten, bevorzugten Ausführungsbeispiel vier - über den Ringumfang insbesondere gleichmäßig verteilt angeordnete, sich in axialer Richtung bis in den konischen Ringabschnitt 16 erstreckende Schlitze 18 in mindestens drei Ringsektoren 20 unterteilt ist. Bevorzugt sind - wie dargestellt - vier Ringsektoren 20 vorhanden, die sich jeweils etwa über einen Winkel von 90° erstrecken, abzüglich der Winkelerstreckung bzw. Breite jeweils eines der Schlitze 18.

Wie sich nun weiterhin aus Fig. 5 und 6 ergibt, ist vorzugsweise an einer Stelle des Umfanges des Halteringes 8 zur Trennung zweier benachbarter Ringsektoren 20 ein in axialer Richtung durchgehender Schlitz 22 vorgesehen. Durch diese bevorzugte Ausführung wird die Montage des Halteringes 8 erleichtert, indem dieser zum Einsetzen in die Aufnahmeöffnung 8 im Durchmesser reduziert werden kann, bis er sich in seiner Einsetzposition wieder federelastisch aufweitet.

Zudem ist es nun besonders vorteilhaft, wenn sich die den Arretierringabschnitt 12 unterteilenden Schlitze 18 - abgesehen von dem vorzugsweise vorhandenen, axial durchgehenden Schlitz 22 - bis in den in axialer Richtung gesehen etwa mittigen Bereich des konischen Ringabschnitts 16 erstrecken. Hierbei weist dann der konische Ringabschnitt 16 vorzugsweise derart den erstgenannten Schlitzen 18 axial gegenüberliegende zweite Schlitze 24 auf, daß die Ringsektoren 20 über in axialer Richtung gesehen etwa mittig angeordnete, in Umfangsrichtung verlaufende Verbindungsstege 26 miteinander verbunden sind. Im Bereich des durchgehenden Schlitzes 22 fehlt dann ein solcher Verbindungssteg 26. Durch die Schlitze 18, 24 und ggf. 22 wird eine Art "Torsionsfeder" gebildet, die beim Einstecken des Steckerteils 6 um eine in Umfangsrichtung verlaufende und in axialer Richtung etwa mittig angeordnete Torsionsachse 28 tordiert. Dies bedeutet, daß eine "Verwindung in sich" stattfindet, wobei im Falle einer elastischen Aufweitung des Arretierringabschnittes 12 gleichzeitig im axial gegenüberliegenden freien Endbereich des konischen Ringabschnittes 16 eine Durchmesserreduzierung erfolgt. Diese Torsionsbewegung ist in Fig. 6 durch eingezeichnete Doppelpfeile 30 veranschaulicht.

Zur Bildung des Arretierringabschnittes 12 ist das Blechmaterial ausgehend von dem Bereich des geringeren Durchmessers des konischen Ringabschnittes 16 radial nach innen wulstartig umgebördelt bzw. -gerollt. Über den konischen Ringteil 16 ist der Haltering 8 vorteilhafterweise selbstzentrierend in der Aufnahmeöffnung 4 des Gehäuseteils 2 abgestützt.

Gemäß Fig. 1 bis 4 weist die Aufnahmeöffnung 4 des Gehäuseteils 2 in Anpassung an den Haltering 8 und dessen erfindungsgemäße Verformbarkeit eine derartige Innenkontur auf, daß beim Einstecken des Steckerteils 6 die oben bereits beschriebene Torsion bzw. Verwindung des Halteringes 8 bzw. der Ringsektoren 20 relativ zueinander um die in Umfangsrichtung verlaufende Torsionsachse 28 möglich ist bzw. sogar noch unterstützt wird, wodurch sich dann der Arretierringabschnitt 12 aufweitet und nachfolgend in die Außenringnut 10 des Steckerteils 6 einrastet. Diese Funktion ist anhand der in den Fig. 1 bis 4 veranschaulichten Einsteckzustände leicht nachzuvollziehen. Dabei tritt beim Aufweiten des Arretierringabschnittes 12 gleichzeitig eine Verengung im axial gegenüberliegenden Bereich des konischen Ringabschnittes 16 auf (s. Fig. 2); diese Torsionsbewegung führt somit - bezogen auf die Axialschnittkontur des Halteringes 8 - zu einer "wippenartigen Verformungsbewegung", wozu nochmals auf in Fig. 6 eingezeichneten Pfeile 30 verwiesen wird. Hierzu besitzt die Aufnahmeöffnung 4 bevorzugt eine Innenkontur mit einem - eine Art "Wippenlager" bildenden - Ringanlagebereich 32 für den etwa axialmittigen Bereich der Verbindungsstege 26 des Halteringes 8, mit einer Erweiterung 34 für den Endbereich des konischen Ringabschnittes 16, mit einer Verengung 36 zum Eindrücken des Arretierringabschnittes 12 in die Steckerteil-Außenringnut 10 bei Zug am Steckerteil 6 (siehe Fig. 4) sowie mit einer zwischen dem Ringanlagebereich 32 und der Verengung 36 angeordneten Ringkammer 38 zur Aufnahme des sich beim Steckvorgang elastisch aufweitenden Arretierringabschnittes 12. Hierbei ist es besonders vorteilhaft, wenn der Ringanlagebereich 32 als eine sich in Einsteckrichtung (Pfeile 14) konisch erweiternde Ringfläche ausgebildet ist. Zudem ist vorzugsweise die Verengung 36 als eine sich entgegen der Einsteckrichtung vorzugsweise bis etwa auf einen im wesentlichen dem Außendurchmesser des Steckerteils 6 entsprechenden Innendurchmesser der Aufnahmeöffnung 4 verjüngende Konusfläche ausgebildet. Dabei sind bevorzugt die den Ringanlagebereich 32 bildende konische Ringfläche und die die Verengung 36 bildende Konusfläche jeweils Teil einer gemeinsamen, von der erweiterten Ringkammer 38 unterbrochenen Konusfläche, an der vorzugsweise der Haltering 8 im Arretierzustand (Fig. 4) großflächig anliegt, und zwar mit dem Arretierringabschnitt 12 und dem konischen Ringabschnitt 16.

Beim Einstecken des Steckerteils 6 in Pfeilrichtung 14 erfolgt eine Axialverschiebung des Halteringes 8 in der gleichen Richtung, bis der Arretierringabschnitt 12 in den Bereich der Ringkammer 38 gelangt und sich dort in radialer Richtung aufweiten kann (Fig. 1 und 2). Nach Einrasten in die Stecker-Außenringnut 10 und bei - z.B. druckbedingtem - Zurückziehen des Steckerteils 6 in Pfeilrichtung 15 (Fig. 3) wird der Haltering mitgenommen, so daß der Arretierringabschnitt 12 in den Bereich der Verengung 36 gelangt und von dieser formschlüssig in der Außenringnut 10 gehalten wird (Arretierzustand in Fig. 4).

In der dargestellten, bevorzugten Ausführungsform der Erfindung ist das Gehäuseteil 2 zwecks Lösbarkeit der Verbindung zweiteilig ausgebildet; es besteht aus einem Basisteil 40 und einem lösbar mit diesem verbundenen Einsatzteil 42. Vorzugsweise ist das Einsatzteil 42 als Einschraubteil ausgebildet und greift mit einem Außengewinde in ein Innengewinde des Basisteils 40 ein. Hierbei ist in axialer Richtung zwischem einer Stirnringfläche des Einsatzteils 42 und einer Ringstufe 44 des Basisteils 40 die Erweiterung 34 für den Endbereich des konischen Ringabschnittes 16 in Form einer inneren Ringnut gebildet. Hierdurch ist es möglich, das Einsatzteil 42 vom Basisteil 40 zu trennen und gemeinsam mit dem Steckerteil 6 zu entnehmen. Vorteilhafterweise ist dann der konische Ringabschnitt 16 des Halteringes 8 von außen zugänglich, so daß die Ringsektoren 20 manuell oder mittels eines geeigneten Werkzeuges zwecks Aufweitung des Arretierringabschnittes 12 verformt und so der Haltering 8 vom Steckerteil 6 gelöst werden kann. Es kann dann das Steckerteil 6 aus der Aufnahmeöffnung 4 des Gehäuseteils 2 bzw. des Einsatzteils 42 entnommen werden.

Zwecks Abdichtung der Steckverbindung ist einerseits in einer Innenringnut des Gehäuseteils 2 ein Dichtring 46 angeordnet, der zur dichtenden Auflage auf dem Außenumfang des Steckerteils 6 gelangt. Vorzugsweise ist zusätzlich ein weiterer Dichtring 48 vorgesehen, der etwa im Mündungsbereich der Aufnahmeöffnung 4 angeordnet ist, und der mit einem äußeren Ringsteg 50 des Steckerteils dichtend zusammenwirkt. Hierbei ist bevorzugt vorgesehen, daß der Ringsteg 50 - sowie auch die Außenringnut 10 und ein einsteckseitiger Außenkonus 52 - spanlos durch Stauchen eines Rohrmaterials des Steckerteils 6 gebildet sind.

## Patentansprüche

1. Steckverbindung für Druckmittelleitungen, mit einem eine Aufnahmeöffnung (4) zum Einstecken eines Steckerteils (6) aufweisenden Gehäuseteil (2) und mit einem innerhalb der Aufnahmeöffnung (4) gelagerten, radialelastisch verformbaren, zum Arretieren des eingesteckten Steckerteils (6) in eine an diesem vorhandene Außenringnut (10) eingreifenden Haltering (8),
**dadurch gekennzeichnet,** daß der Haltering (8) als Blechformteil mit einem umgebördelten Arretierringabschnitt (12) zum Eingreifen in die Außenringnut (10) des Steckerteils (6) sowie mit einem sich in Einsteckrichtung (14) an den Arretierringabschnitt (12) anschließenden und konisch erweiternden Ringabschnitt (16) ausgebildet ist, wobei der Arretierringabschnitt (12) dadurch radialelastisch verformbar ist, daß er durch mindestens drei über den Ringumfang verteilt angeordnete, sich in axialer Richtung in den konischen Ringabschnitt (16) erstrekkende Schlitze (18) in mindestens drei Ringsektoren (20) unterteilt ist.

2. Steckverbindung nach Anspruch 1
**dadurch gekennzeichnet,** daß sich die den Arretierringabschnitt (12) unterteilenden Schlitze (18) - abgesehen von einem vorzugsweise vorgesehenen, in axialer Richtung durchgehenden Schlitz (22) - bis in den in axialer Richtung etwa mittigen Bereich des konischen Ringabschnitts (16) erstrecken, wobei vorzugsweise der konische Ringabschnitt (16) derart den Schlitzen (18) axial gegenüberliegende zweite Schlitze (24) aufweist, daß die Ringsektoren (20) über in axialer Richtung gesehen etwa mittig angeordnete, in Umfangsrichtung verlaufende Verbindungsstege (26) miteinander verbunden sind.

3. Steckverbindung nach Anspruch 1 oder 2,
**dadurch gekennzeichnet,** daß der Arretieringabschnitt (12) ausgehend von dem konischen Ringabschnitt (16) radial nach innen wulstartig umgebördelt bzw. -gerollt ist.

4. Steckverbindung nach einem oder mehreren der Ansprüche 1 bis 3,
**dadurch gekennzeichnet,** daß der Haltering (8) über den konischen Ringteil (16) selbstzentrierend in der Aufnahmeöffnung (4) des Gehäuseteils (2) abgestützt ist.

5. Steckverbindung nach einem oder mehreren der Ansprüche 1 bis 4,
**dadurch gekennzeichnet,** daß die Aufnahmeöffnung (4) des Gehäuseteils (2) in Anpassung an den Haltering (8) und dessen Verformbarkeit eine derartige Innenkontur aufweist, daß beim Einstecken des Steckerteils (6) eine Torsion des Halteringes (8) bzw. der Ringsektoren (20) um eine in Umfangsrichtung verlaufende Torsionsachse (28) derart erfolgt, daß sich der Arretieringabschnitt (12) aufweitet und nachfolgend in die Außenringnut (10) des Steckerteils (6) einrastet.

6. Steckverbindung nach Anspruch 5,
**dadurch gekennzeichnet,** daß die Aufnahmeöffnung (4) eine Innenkontur mit einem Ringanlagebereich (32) für den etwa axialmittigen Bereich des Halteringes (8), mit einer Erweiterung (34) für den Endbereich des konischen Ringabschnittes (16), mit einer Verengung (36) zum Eindrücken des Arretierringabschnittes (12) in die Steckerteil-Außenringnut (10) sowie mit einer zwischen dem Ringanlagebereich (32) und der Verengung (36) angeordneten Ringkammer (38) zur Aufnahme des sich beim Steckvorgang elastisch aufweitenden Arretierringabschnittes (12) aufweist.

7. Steckverbindung nach Anspruch 6,
**dadurch gekennzeichnet,** daß der Ringanlagebereich (32) als eine sich in Einsteckrichtung konisch erweiternde Ringfläche ausgebildet ist.

8. Steckverbindung nach Anspruch 6 oder 7,
**dadurch gekennzeichnet,** daß die Verengung (36) als eine sich entgegen der Einsteckrichtung vorzugsweise bis etwa auf einen im wesentlichen den Außendurchmesser des Steckerteils (6) entsprechenden Innendurchmesser verjüngende Konusfläche ausgebildet ist.

9. Steckverbindung nach Anspruch 7 oder 8,
**dadurch gekennzeichnet,** daß die konische Ringfläche (32) und die Konusfläche (36) jeweils Teil einer gemeinsamen, von der Ringkammer (38) unterbrochenen Konusfläche sind, an der vorzugsweise der Haltering (8) im Arretierzustand großflächig anliegt.

10. Steckverbindung nach einem oder mehreren der Ansprüche 1 bis 9,
**dadurch gekennzeichnet,** daß das Gehäuseteil (2) zwecks Lösbarkeit der Verbindung zweiteilig aus einem Basisteil (40) und einem lösbar mit diesem verbundenen Einsatzteil (42) besteht.

11. Steckverbindung nach Anspruch 10,
**dadurch gekennzeichnet,** daß das Einsatzteil (42) als Einschraubteil ausgebildet und mit einem Außengewinde in ein Innengewinde des Basisteils (40) eingeschraubt ist.

12. Steckverbindung nach Anspruch 10 oder 11,
**dadurch gekennzeichnet,** daß axial zwischem dem Einsatzteil (42) und einer Ringstufe (44) des Basisteils (40) die Erweiterung (34) für den Endbereich des konischen Ringabschnittes (16) als innere Ringnut gebildet ist.

13. Steckverbindung nach einem oder mehreren der Ansprüche 5 bis 12,
**dadurch gekennzeichnet,** daß der Haltering (8) derart axialverschiebbar innerhalb der Aufnahmeöffnung (4) angeordnet ist, daß der Arretierringabschnitt (12) in einer in Einsteckrichtung (14) verschobenen Stellung (Fig. 2) im Bereich der Ringkammer (38) angeordnet und dadurch aufweitbar ist und in einer in Entnahmerichtung verschobenen Stellung (Fig. 4) zwecks Arretierung des Steckerteils (6) im Bereich der Verengung (36) angeordnet ist und hierdurch vorzugsweise mit einer radial nach innen gerichteten Haltekraft beaufschlagt wird.

## Claims

1. Plug-in connection for pressure-medium lines, having a housing part (2) with a receiving opening (4) for a plug part (6) to be plugged into, and having a retaining ring (8) which is mounted inside the receiving opening (4), is radially resiliently deformable and, in order to lock the plug part (6) when plugged in, engages in an outer annular groove (10) on the said plug part, characterized in that the retaining ring (8) is designed as a shaped sheet-metal part having a peened-over locking-ring section (12) to engage in the outer annular groove (10) in the plug part (6) and having a ring section (16) which adjoins the locking-ring section (12) in the plug-in direction (14) and widens conically, the locking-ring section (12) being radially resiliently deformable by virtue of the fact that it is subdivided into at least three annular sectors (20) by at least three slots (18) which are arranged distributed over the annular extent and extend in the axial direction into the conical ring section (16).

2. Plug-in connection according to Claim 1, characterized in that the slots (18) which subdivide the locking-ring section (12) - apart from a slot (22) which is preferably provided and is continuous in the axial direction - extend as far as that area of the conical ring section (16) which is approximately central in the axial direction, it being preferable for the conical ring section (16) to have second slots (24) located axially opposite the slots (18) such that the annular sectors (20) are joined to one another by connecting webs (26) which extend in the circumferential direction and, as viewed in the axial direction, are arranged approximately centrally.

3. Plug-in connection according to Claim 1 or 2, characterized in that the locking-ring section (12) is peened over or rolled over radially inwards like a bead, starting from the conical ring section (16).

4. Plug-in connection according to one or more of Claims 1 to 3, characterized in that the retaining ring (8) is supported by the conical ring part (16) in a self-centring manner in the receiving opening (4) in the housing part (2).

5. Plug-in connection according to one or more of Claims 1 to 4, characterized in that the receiving opening (4) in the housing part (2), to match the retaining ring (8) and the ability of the latter to be deformed, has an inner contour such that when the plug part (6) is plugged in, torsion of the retaining ring (8) and the annular sectors (20) about a torsion axis (28) extending in the circumferential direction takes place in such a way that the locking-ring section (12) is expanded and subsequently latches into the outer annular groove (10) in the plug part (6).

6. Plug-in connection according to Claim 5, characterized in that the receiving opening (4) has an inner contour with a ring contact area (32) for the approximately axially central area of the retaining ring (8), with a widening (34) for the end area of the conical ring section (16), with a narrowing (36) to press the locking-ring section (12) into the plug-part outer annular groove (10), and with an annular chamber (38), arranged between the ring contact area (32) and the narrowing (36), to accommodate the locking-ring section (12), which expands resiliently during the plugging-in operation.

7. Plug-in connection according to Claim 6, characterized in that the ring contact area (32) is designed as an annular face which widens conically in the plug-in direction.

8. Plug-in connection according to Claim 6 or 7, characterized in that the narrowing (36) is designed as a conical face which tapers in the direction opposite to the plug-in direction, preferably as far as an internal diameter essentially corresponding to the external diameter of the plug part (6).

9. Plug-in connection according to Claim 7 or 8, characterized in that the conical annular face (32) and the conical face (36) are respectively part of a common conical face which is interrupted by the annular chamber (38) and on which the retaining ring (8) preferably rests with its whole area when locked.

10. Plug-in connection according to one or more of Claims 1 to 9, characterized in that, for the purpose of making the connection detachable, the housing part (2) comprises two parts - a base part (40) and an insert part (42) detachably connected to the latter.

11. Plug-in connection according to Claim 10, characterized in that the insert part (42) is designed as a screw-in part and is screwed by means of an external thread into an internal thread in the base part (40).

12. Plug-in connection according to Claim 10 or 11, characterized in that the widening (34) for the end area of the conical ring section (16) is formed as an inner annular groove axially between the insert part (42) and an annular step (44) on the base part (40).

13. Plug-in connection according to one or more of Claims 5 to 12, characterized in that the retaining ring (8) is arranged to be axially displaceable within the receiving opening (4) such that the locking-ring section (12), when in a position displaced in the plug-in direction (Fig. 2), is arranged in the area of the annular chamber (38) and can be expanded as a result and, when in a position displaced in the removal direction (Fig. 4) for the purpose of locking the plug part (6), is arranged in the area of the narrowing (36) and in this way is preferably acted on by a retaining force which is directed radially inwards.

## Revendications

1. Raccord à emmanchement pour conduites de fluide sous pression, comprenant une partie de boîtier (2) qui présente une ouverture de réception (4) pour l'emmanchement d'une partie mâle (6) et une bague de retenue (8) montée à l'intérieur de l'ouverture de réception (4), élastiquement déformable dans la direction radiale et qui, pour le blocage de la partie mâle (6) emmanchée, s'engage dans une gorge annulaire (10) extérieure présente sur cette dernière,
caractérisé en ce que la bague de retenue (8) est constituée par une pièce de forme en tôle possédant un segment de blocage rabattu (12) destiné à s'engager dans la gorge annulaire extérieure (10) de la partie mâle (6), ainsi qu'un segment de bague (16) qui fait suite au segment de blocage (12) de la bague, dans le sens de l'emmanchement (14) et qui s'élargit avec une forme conique, le segment de blocage (12) de la bague étant déformable élastiquement dans la direction radiale grâce au fait qu'il est divisé en au moins trois secteurs de bague (20) par au moins trois fentes (18) réparties sur la circonférence de la bague, et qui s'étendent dans la direction axiale dans le segment conique (16) de la bague.

2. Raccord à emmanchement selon la revendication 1,
caractérisé en ce que les fentes (18) qui divisent le segment de blocage (12) de la bague s'étendent - à l'exception d'une fente (22), prévue de préférence, qui est ininterrompue dans la direction axiale - jusque dans la région axialement médiane, du segment conique (16) de la bague, le segment conique (16) de la bague présentant des deuxièmes fentes (24) s'étendant axialement à l'opposé des fentes (18), de manière que les secteurs (20) de la bague soient reliés entre eux par des voiles de liaison (26) disposés à peu près au milieu dans la direction axiale et s'étendant dans la direction circonférentielle.

3. Raccord à emmanchement selon la revendication 1 ou 2,
caractérisé en ce que le segment de blocage (12) de la bague est rabattu ou roulé radialement vers l'intérieur à la façon d'un bourrelet en partant du segment conique (16) de la bague.

4. Raccord à emmanchement selon une ou plusieurs des revendications 1 à 3,
caractérisé en ce que la bague de retenue (8) est appuyée, par la partie conique (16) de la bague et avec autocentrage dans l'ouverture de réception (4) de la partie emboîture (2).

5. Raccord à emmanchement selon une ou plusieurs des revendications 1 à 4,
caractérisé en ce que l'ouverture de réception (4) de la partie de boîtier (2) présente, pour s'adapter à la bague de retenue (8) et à sa déformabilité, un contour intérieur tel, que lors de l'emmanchement de la partie mâle (6), il se produise une torsion de la bague de retenue (8) ou des secteurs (20) de la bague autour d'un axe de torsion (28) qui s'étend dans la direction circonférentielle de telle manière que les segments de blocage (12) de la bague s'élargissent et, ensuite, s'encliquettent dans la gorge annulaire extérieure (10) de la partie mâle (6).

6. Raccord à emmanchement selon la revendication 5,
caractérisé en ce que l'ouverture de réception (4) présente un contour intérieur comprenant une région (32) d'appui sur la bague, pour la région à peu près centrale dans la direction axiale de la bague de retenue (8), un élargissement (34) pour la région terminale du segment conique (16) de la bague, un rétrécissement (36) destiné à enfoncer le segment de blocage (12) de la bague dans la gorge annulaire extérieure (10) de la partie mâle, ainsi qu'une chambre annulaire (38) disposée entre la région (32) d'appui de la bague et le rétrécissement (36), et destinée à recevoir le segment de blocage (12) de la bague qui s'élargit élastiquement lors de l'opération d'emmanchement.

7. Raccord à emmanchement selon la revendication 6,
caractérisé en ce que la région (32) d'appui sur la bague est constituée par une surface annulaire qui s'élargit avec une forme conique dans le sens de l'emmanchement.

8. Raccord à emmanchement selon la revendication 6 ou 7,
caractérisé en ce que le rétrécissement (36) est constitué par une surface de cône qui se rétrécit dans le sens inverse de l'emmanchement, de préférence jusqu'à un diamètre intérieur qui correspond sensiblement au diamètre extérieur de la partie mâle (6).

9. Raccord à emmanchement selon la revendication 7 ou 8,
caractérisé en ce que la surface conique (32) de la bague et la surface de cône (36) sont respectivement des parties d'une surface de cône commune interrompue par la chambre annulaire (38), et contre laquelle la bague de retenue (8) s'applique de préférence par une grande surface dans l'état de blocage.

10. Raccord à emmanchement selon une ou plusieurs des revendications 1 à 9,
caractérisé en ce que, pour assurer la démontabilité du raccord, la partie de boîtier (2) et réalisée en deux parties, constituées par une partie de base (40) et une partie rapportée (42) assemblée à celle-ci de façon démontable.

11. Raccord à emmanchement selon la revendication 10,
caractérisé en ce que la partie rapportée (42) est constituée par une partie filetée et est vissée dans un filetage intérieur de la partie de base (40).

12. Raccord à emmanchement selon la revendication 10 ou 11,
caractérisé en ce que l'élargissement (34) destiné à recevoir la région terminale du segment conique (16) de la bague est réalisé sous la forme d'une gorge annulaire intérieure placée axialement entre la partie rapportée (42) et un épaulement annulaire (44) de la partie de base (40).

13. Raccord à emmanchement selon une ou plusieurs des revendications 5 à 12,
caractérisé en ce que la bague de retenue (8) est disposée mobile en translation axiale à l'intérieur de l'ouverture de réception (4) de telle manière que, lorsqu'il est dans une position repoussée dans le sens de l'emmanchement (14) (figure 2), le segment de blocage (12) de la bague soit disposé dans la région de la chambre annulaire (38) et, de cette façon, capable de se dilater, tandis que, lorsqu'il est dans une position repoussée dans le sens de l'extraction (figure 4), il soit disposé dans la région du rétrécissement (36) pour le blocage de la partie mâle (6) et, sous cet effet, sollicité de préférence par une force de retenue dirigée radialement vers l'intérieur.
